# EUROPEAN PATENT SPECIFICATION

(11) **EP 0 368 472 B1**
(45) Date of publication and mention of the grant of the patent: **15.12.1993**
(21) Application number: 89310217.8
(22) Date of filing: 05.10.1989
(51) Int. Cl.: B63G 8/42, G01V 1/02

(54) **A fastening member and fastening arrangement for seismic equipment**
Befestigungsglied und -vorrichtung für eine seismische Anlage
Elément et agencement de fixation pour ensemble sismique

(30) Priority: 11.11.1988 NO 885044
(43) Date of publication of application: 16.05.1990
(73) Proprietor: GECO A.S., N-1300 Sandvika (NO)
(72) Inventor: Gjestrum, Einar, N-1300 Sandvika (NO); Skifjeld, Tormod, N-3000 Drammen (NO); Knudsen, Lars, N-3033 Drammen (NO); Russel, Michael, Polperro Park Filling Station, Looe,Cornwall PL13 2JE (GB)
(74) Representative: Robinson, John Stuart

(56) References cited:
- EP-A- 0 228 832
- US-A- 4 658 387
- US-A- 4 715 023
- US-A- 4 719 987

## Description

The invention relates to fastening members and arrangements for fixing seismic devices such as seismic energy sources of the airgun kind in a defined manner, for instance for fixing at least two devices firmly at a mutual distance in a frame structure.

In seismic surveys at sea, an array of different seismic devices is towed in the water. In part, such devices are sensitive as regards impact or shock loads; in part, the towing system proper is sensitive to such loads. Special problems arise in connection with suspending such seismic acoustic sources, e.g. airguns, which are towed in arrays behind the seismic vessel, since they are suspended from below raft arrangements or the like. Due to the shock and impact loads triggered when the guns are fired, tugs and wear will result in the air conduits extending to the guns, in electric control lines, and in suspension members. Furthermore, wear and undesirable effects will also arise due to movement of the water, i.e. waves as well as general movement due to towing. Such problems will occur both with separately suspended guns and with guns suspended in framelike devices, in so called clusters.

In an article in the magazine Geophysics, Vol.44, No. 5 (May 1979), pp 865-879 assembling of airguns in a group or a "cluster" is described, where the guns are attached to the frame at predetermined mutual distances, so that they may be fired while in a constant geometrical arrangement and without said geometrical arrangement being changed by or after firing. Such mounting of airguns in a frame structure results in a number of advantages in seismic surveys and this technique has been known for a long time.

In US-PS No. 4 719 987 (corresponding to NO Patent Application 85 2459), another design is shown with seismic sources of energy suspended in groups, where the sources of energy are maintained at a predetermined mutual distance by means of a chain means which is attached to the sources by means of sleeves. Neither of the mentioned publications, however, discloses the mounting of the seismic energy sources in detail.

The mounting proper of such sensitive seismic equipment, however, proved to be critical and decisive to the results achieved during survey, as shock and impact effects may cause distortion of signals and, in the case of a group arrangement of airguns in frame structures or chain constellations, mutual distances may be changed so that the desired results may not be achieved.

According to a first aspect of the invention, there is provided a fastening member as defined in the appended Claim 1.

According to a second aspect of the invention, there is provided a fastening arrangement as defined in the appended Claim 8.

Preferred embodiments of the invention are defined in the other appended claims.

It is thus possible to provide a fastening member and arrangement for use with circular seismic equipment, in which the problem caused by transfer of impact or shock loads is avoided while mechanical wear is reduced to a minimum on seismic equipment, on supply lines to seismic equipment, and on the suspension means proper. Furthermore, it is also possible to provide a fastening member and arrangement by means of which it is possible, in the case of localization in a frame of, e.g. seismic airguns, to maintain accurate positioning of the guns in relation to each other, to hydrophones, to the towing vessel, and to signal receiving cables (streamers).

Such a fastening member and arrangement are useful both for single guns and for clustered guns.

By using such fastening members and arrangements for seismic sources such as airguns, it is possible to provide a seismic system which is able to provide a stable output signature.

The invention will be further described, by way of example, with reference to the accompanying drawings, in which:
Figure 1 shows an arrangement of seismic airguns in a frame structure in a side elevation;
Figure 2 shows the arrangement of Figure 1 in an end view; and
Figure 3 shows a side elevation illustrating a main fastening member.

The drawings show fastening members and arrangements for seismic airguns mounted in a cluster to be towed behind a seismic vessel in a manner corresponding to that disclosed in the two above mentioned publications.

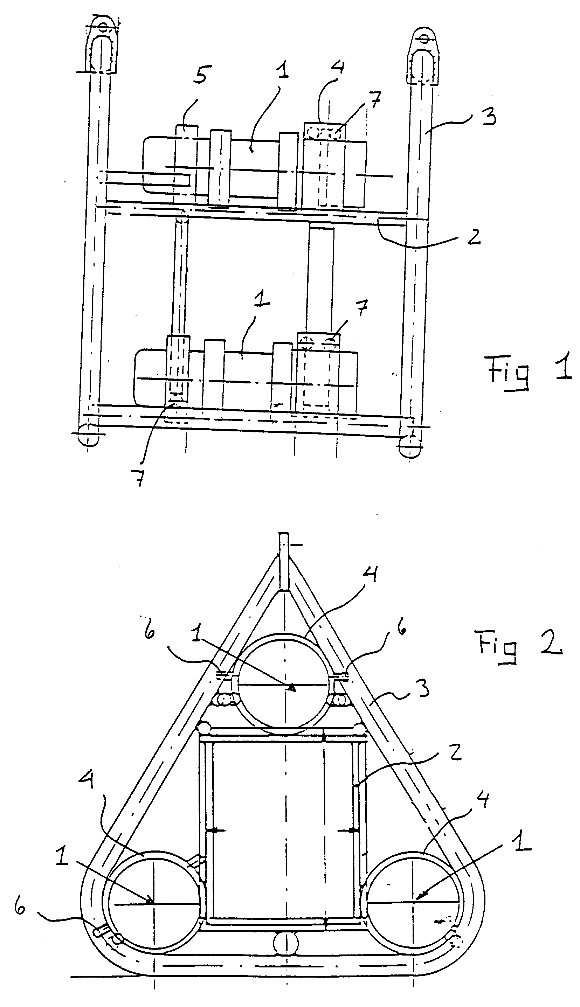

Airguns 1 are provided in a frame comprising an inner portion 2 and an outer portion 3. Fastening members for the airguns 1 comprise a main member 4 and an additional member 5. Both members are designed as hollow clamps with the void facing inwards, towards the airgun, and with a shape corresponding to that of the airgun to be able to envelope the latter tightly. Both clamps 4 and 5 are, thus, concentric with the airgun. The clamps 4, 5 are split, preferably into two portions and, dependent on the mounting technique and place of mounting, may be designed for different joining methods. In the embodiment shown, two clamp portions are used, which are provided with cooperating flanges, if desired with a hinge on one side. The flanges may be bolted together, and are diagrammatically shown in Figure 2 at reference numeral 6. In the inner void of the clamps, impact and shock absorbing buffers are provided, preferably in the shape of circular, hose shaped members which are placed about the entire circumference of the airgun. These members are designated 7 in the drawings. A suitable material for these impact absorbing members is a polyurethane sold under the trade name "Adepren".

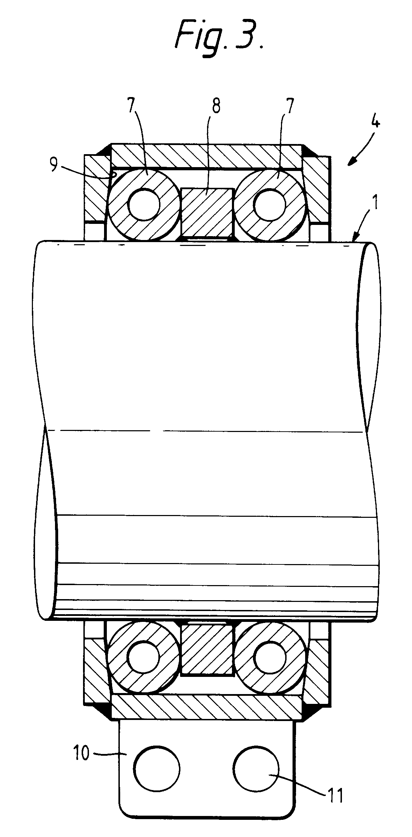

In the most strained area of the airgun, where the strongest impact absorption and, at the same time, the strongest hold is necessary, a ring 8 is provided, preferably by welding, to be concentric with the airgun. The main clamp 4 is designed with sufficient width to encase the ring and to provide space for an impact absorbing member 7 on each side, as shown in Figure 3. In this manner, the clamp 4 will be accurately fixed in the correct localisation while very good transfer of forces is achieved from the outside of the gun, via both impact absorbing members 7, to the clamp proper, which is in turn secured to frame structure 2, 3. In order to provide an additionally secure hold, the clamp walls towards the internal clamp void may be inclined as indicated at 9 in Figure 3. Alternatively or additionally, the side walls of the ring may be inclined.

For further attachment of other seismic equipment, or to secure one single seismic gun, a lug 10 with a securing hole 11 may be provided on the clamp, as indicated lowermost in Figure 3.

By using two clamps 4 and 5, as illustrated, airguns and other seismic equipment may be provided in a most shock-proof and protected manner, e.g. in frame structures as shown in Figure 1 and Figure 2, or be secured directly in the connection with a buoyancy means without too much wear occurring in the transfer elements, impact loads being absorbed by the shock absorbing members 7. Mounting of the fastening means is very simple, the fastening means is inexpensive in production, and is very reliable and efficient in use. Even though the embodiment has been described in connection with use for airguns, suspension of other impact sensitive equipment may be achieved with clamps of this or similar type. Various modifications are possible. For instance, the void of the clamp need not necessarily be square, but may have other shapes. Also, it is possible to use two "double" clamps 4 instead of one clamp 4 and one further clamp 5. The clamp may be mounted by welding or fastening with screws or bolts to the frame structures or other members, or lug structures as illustrated, may be used.

## Claims

1. A fastening member for fixing in a defined manner a seismic device having a portion, which is subjected to greatest strain, of circular cross-section provided with a fastening ring, the fastening member being characterised by a rigid split substantially annular clamp (4, 5) with an inwardly facing void containing first and second shock absorbing members (7) for location on opposite sides of the ring (8) in contact with the ring (8) and the portion of circular cross-section.

2. A fastening member as claimed in Claim 1, characterized in that the clamp is divided into sections fastened together by fastening means.

3. A fastening member is claimed in Claim 2, characterized in that the clamp has two sections and the fastening means comprise a hinge and a bolt.

4. A fastening member as claimed in Claim 2 or 3, characterized in that the clamp is asymmetrically divided.

5. A fastening member as claimed in any one of the preceding claims, characterized in that the clamp has internal conical sides walls (9).

6. A fastening member as claimed in any one of the preceding claims, characterized in that the clamp is provided with at least one lug (10) having a hole (11) for attachment of other equipment.

7. A fastening member as claimed in any one of the preceding claims, characterized in that each shock absorbing member (7) is a circular hose-shaped member of a hard rubber material.

8. A fastening arrangement for at least one seismic device, characterized by comprising a frame (2, 3) to which is fixed at least one fastening member as claimed in any one of the preceding claims.

9. A fastening arrangement as claimed in Claim 8, characterized in that, for the or each seismic device (1), there is provided a fastening member as claimed in Claim 1 and a further fastening member comprising a rigid, split, substantially annular clamp (5) with an open inwardly facing void containing a single shock absorbing member (7) for another region of the seismic device (1).

10. A fastening arrangement as claimed in Claim 8 or 9 for a plurality of seismic devices, characterized by at least one fastening device as claimed in any one of Claims 1 to 7 for each seismic device (1) arranged to fasten the seismic devices in the frame (2, 3) in fixed positions relative to each other.

11. A fastening arrangement as claimed in any one of Claims 8 to 10, characterized in that the frame comprises an internal frame (2) to which the or each clamp is fixed and which is provided in an external frame (3).

12. A fastening arrangement as claimed in Claim 11, characterized in that the or each clamp (4, 5) is welded to the internal frame (2).

## Patentansprüche

1. Befestigungsglied zur definierten Befestigung eines seismischen Geräts mit einem dem stärksten Strain ausgesetzten Teil mit rundem Querschnitt, der mit einem Befestigungsring versehen ist, wobei das Befestigungsglied gekennzeichnet ist durch eine starre, gespaltene, im wesentlichen ringförmige Klammer (4, 5) mit einem nach innen gerichteten Hohlraum, der ein erstes und ein zweites Stoßdämpferglied (7) aufnimmt, die an gegenüberliegenden Seiten des Ringes (8) im Kontakt mit dem Ring (8) und dem Teil mit rundem Querschnitt angeordnet werden.

2. Befestigungsglied nach Anspruch 1, dadurch gekennzeichnet, daß die Klammer in zwei Abschnitte geteilt ist, die durch Befestigungsmittel aneinander befestigt sind.

3. Befestigungsglied nach Anspruch 2, dadurch gekennzeichnet, daß die Klammer zwei Abschnitte aufweist und zu Befestigungsmitteln ein Gelenk und ein Bolzen gehören.

4. Befestigungsglied nach Anspruch 2 oder 3, dadurch gekennzeichnet, daß die Klammer asymmetrisch geteilt ist.

5. Befestigungsglied nach einem der vorstehenden Ansprüche, dadurch gekennzeichnet, daß die Klammer konische innere Seitenwände (9) aufweist.

6. Befestigungsglied nach einem der vorstehenden Ansprüche, dadurch gekennzeichnet, daß die Klammer mit mindestens einem Ansatz (10) mit einer Bohrung (11) zur Befestigung anderer Ausrüstungen versehen ist.

7. Befestigungsglied nach einem der vorstehenden Ansprüche, dadurch gekennzeichnet, daß jedes Stoßdämpferglied (7) ein rundes schlauchförmiges Glied aus Hartgummimaterial ist.

8. Befestigungsvorrichtung für mindestens ein seismisches Gerät, gekennzeichnet durch einen Rahmen (2, 3), an dem mindestens ein Befestigungsglied nach einem der vorstehenden Ansprüche angebracht ist.

9. Befestigungsvorrichtung nach Anspruch 8, dadurch gekennzeichnet, daß für das bzw. jedes seismische Gerät (1) ein Befestigungsglied nach Anspruch 1 und ein weiteres Befestigungsglied mit einer starren, geteilten, im wesentlichen ringförmigen Klammer (5) mit einem nach innen offenen Hohlraum, der ein einzelnes Stoßdämpferglied (7) für einen weiteren Bereich des seismischen Geräts (1) aufnimmt, vorgesehen sind.

10. Befestigungsvorrichtung nach Anspruch 8 oder 9 für mehrere seismische Geräte, gekennzeichnet durch mindestens eine Befestigungsvorrichtung nach einem der Ansprüche 1 bis 7 für jedes seismische Gerät (1), die so angeordnet sind, daß sie die seismischen Geräte relativ zueinander in festen Positionen in dem Rahmen (2, 3) fixieren.

11. Befestigungsvorrichtung nach einem der Ansprüche 8 bis 10, dadurch gekennzeichnet, daß der Rahmen einen inneren Rahmen (2) aufweist, an dem jede Klammer befestigt ist und der in einem äußeren Rahmen (3) angebracht ist.

12. Befestigungsvorrichtung nach Anspruch 11, dadurch gekennzeichnet, daß die bzw. jede Klammer (4, 5) an den inneren Rahmen (2) angeschweißt ist.

## Revendications

1. Un élément de fixation pour fixer de façon définie un dispositif sismique possédant une partie soumise à une très forte tension, de section circulaire, comportant un anneau de fixation, l'élément de fixation étant caractérisé par une pince fendue rigide, pratiquement annulaire (4, 5) avec un évidement orienté vers l'intérieur contenant des premier et deuxième éléments amortisseurs de chocs (7) agencés sur les côtés opposés de l'anneau (8), en contact avec l'anneau (8) et la partie de section circulaire.

2. Un élément de fixation selon la revendication 1, caractérisé en ce que la pince est divisée en sections assemblées par l'intermédiaire du moyen de fixation.

3. Un élément de fixation selon la revendication 2, caractérisé en ce que la pince possède deux sections et en ce que le moyen de fixation comprend une charnière et un boulon.

4. Un élément de fixation selon les revendications 2 ou 3, caractérisé en ce que la pince est divisée de façon asymétrique.

5. Un élément de fixation selon l'une quelconque des revendications précédentes, caractérisé en ce que la pince possède des parois latérales internes coniques (9).

6. Un élément de fixation selon l'une quelconque des revendications précédentes, caractérisé en ce que la pince comporte au moins une languette (10) pourvue d'un trou (11) en vue de la fixation d'autres dispositifs.

7. Un élément de fixation selon l'une quelconque des revendications précédentes, caractérisé en ce que chaque élément amortisseur de chocs (7) est un élément circulaire en forme de tuyau composé de caoutchouc dur.

8. Un agencement de fixation pour au moins un dispositif sismique, caractérisé en ce qu'il comprend un cadre (2, 3) auquel est fixé au moins un élément de fixation selon l'une quelconque des revendications précédentes.

9. Un agencement de fixation selon la revendication 8, caractérisé en ce que, pour les dispositifs sismiques ou chaque dispositif sismique (1), on prévoit un élément de fixation selon la revendication 1 et un élément de fixation supplémentaire comprenant une pince fendue rigide, pratiquement annulaire (5) avec un évidement ouvert orienté vers l'intérieur, contenant un seul élément amortisseur de chocs (7) pour une autre région du dispositif sismique (1).

10. Un agencement de fixation selon les revendications 8 ou 9 pour plusieurs dispositifs sismiques, caractérisé par au moins un dispositif de fixation selon l'une quelconque des revendications 1 à 7 pour chaque dispositif sismique (1), destiné à fixer les dispositifs sismiques dans le cadre (2, 3) dans des positions fixes l'un par rapport à l'autre.

11. Un agencement de fixation selon l'une quelconque des revendications 8 à 10, caractérisé en ce que le cadre comprend un cadre interne (2) auquel est (sont) fixée(s) chaque pince ou les pinces, et qui est agencé dans un cadre externe (3).

12. Un agencement de fixation selon la revendication 11, caractérisé en ce que chaque pince ou les pinces (4, 5) est (sont) soudée(s) au cadre interne (2).
